# EUROPÄISCHE PATENTSCHRIFT

(11) **EP 1 602 522 B1**
(45) Veröffentlichungstag und Bekanntmachung des Hinweises auf die Patenterteilung: **16.04.2008**
(21) Anmeldenummer: 05010699.6
(22) Anmeldetag: 18.05.2005
(51) Int. Cl.: B60W 30/18, F02D 41/02, B60W 10/06, B60W 10/30

(54) **Verfahren zur optimierten Erfassung des Getriebeeingangsmomentes in Fahrzeugen, die mit motorseitigen Nebenaggregaten ausgestattet sind**
Method to optimize the determination of the transmission input torque in vehicles having engine driven accessories
Procédé pour améliorer la détection du couple d'entrée de boite de vitesses pour des véhicules avec accessoires entrainés par le moteur

(30) Priorität: 03.06.2004 DE 102004027063
(43) Veröffentlichungstag der Anmeldung: 07.12.2005
(73) Patentinhaber: ZF FRIEDRICHSHAFEN AG, 88038 Friedrichshafen (DE)
(72) Erfinder: Böck, Horst, 88048 Friedrichshafen (DE); Sorg, Franz, 88085 Langenargen (DE)

(56) Entgegenhaltungen:
- EP-A- 0 736 407
- EP-A- 1 188 601
- US-A- 5 826 208
- US-A- 5 947 863
- US-A- 6 064 934

## Beschreibung

Die vorliegende Erfindung betrifft ein Verfahren zur optimierten Erfassung des Getriebeeingangsmomentes in Fahrzeugen, die mit motorseitigen Nebenaggregaten ausgestattet sind, gemäß dem Oberbegriff des Patentanspruchs 1. Ein solches Verfahren ist aus der US 6 064 934 A bekannt.

Bei Kraftfahrzeugen kann der Fall auftreten, dass der Antriebsmotor ein höheres maximales Moment liefern kann, als das maximale Getriebeeingangsmoment, wofür das mit dem Antriebsmotor verbundene Getriebe ausgelegt ist.

Nach dem Stand der Technik wird dann die Leistung des Motors in der Motorsteuerung reduziert, um Schäden im Getriebe zu vermeiden. Bei Fahrzeugen, die viele bzw. starke motorseitige Nebenaggregate aufweisen, wie beispielsweise Klimaanlagen, wird von den Nebenaggregaten ein z.T. nicht unerheblicher Teil des Motormomentes aufgenommen, so dass das Getriebeeingangsmoment, was zur Verfügung steht, geringer ist, als das maximale Getriebeeingangsmoment, wofür das Getriebe ausgelegt ist.

Beispielsweise kann eine starke Klimaanlage, die für den Einsatz in Bussen in tropischen Ländern ausgelegt ist, inklusive der damit verbundenen Mehrleistung der Fahrzeugkühlanlage (Radiatorlüfter) motordrehzahlabhängig bis 400 Nm Drehmoment aufnehmen.

Nach den heutigen Applikationsrichtlinien werden diese sogenannten Verlustdrehmomente hinsichtlich des wirklichen Getriebeeingangsmomentes nicht berücksichtigt, da diese Verlustmomente über CAN-Kommunikation dem Getriebesteuergerät nicht zur Verfügung stehen, da nach SAE J1939 nur das vom Zylinderdruck erzeugte Kurbelwellendrehmoment abzüglich der inneren Reibverluste im CAN-Netzwerk weitergeleitet wird.

Aus der EP 0 932 777 B1 ist ein Verfahren zur Kontrolle des Eingangsdrehmomentes eines Getriebes für ein Straßenfahrzeug bekannt, wobei das Fahrzeug eine Motorsteuerung, die die am Ausgang des Fahrzeugmotors verfügbare Gesamtleistung bestimmt, und einen Rechner der Klimaanlage umfasst, wobei der Rechner der Klimaanlage die von der im Fahrzeug befindlichen Klimaanlage aufgenommene Leistung abschätzen kann. Ferner umfasst das Fahrzeug eine Getriebesteuerung, wobei die Motorsteuerung der Getriebesteuerung den Wert des verfügbaren Motordrehmomentes unter Berücksichtigung des von der Klimaanlage aufgenommenen Drehmomentes übermittelt. Gemäß der EP 0 932 777 B1 sendet die Getriebesteuerung an den Rechner der Klimaanlage eine Information, die ein Einfrieren des Zustandes der Stromversorgung der Klimaanlage während bestimmter Betriebsphasen des Getriebes gestattet.

Aus der DE 197 35 855 C2 ist eine Steuerung einer Klimaanlage und einer Kupplung in einem Kraftfahrzeug bekannt, bei der die vom Motor angetriebene Klimaanlage vorübergehend abgeschaltet wird, wenn die Kupplung im Leerlauf vorübergehend zur Beseitigung der Temperaturdrift des Stellaggregates der Kupplung geschlossen wird.

Der vorliegenden Erfindung liegt die Aufgabe zugrunde, ein Verfahren zur optimierten Erfassung des Getriebeeingangsmomentes in Fahrzeugen, die mit motorseitigen Nebenaggregaten ausgestattet sind, anzugeben, bei dem der Antriebsmotor ein höheres maximales Moment liefern kann, als das maximale Getriebeeingangsmoment, wofür das mit dem Antriebsmotor verbundene Getriebe ausgelegt ist, welches die Verlustmomente aufgrund des Betriebs der Nebenaggregate berücksichtigt.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren vorgeschlagen, welches eine Anpassung des vom Antriebsmotor an das Getriebe gelieferten Getriebeeingangsmomentes ermöglicht, derart, dass dem Getriebe unabhängig vom Betrieb der Nebenaggregate das maximal zulässige Getriebeeingangsmoment zur Verfügung steht.

Es wird insbesondere vorgeschlagen, den Betriebsstatus der einzelnen Nebenaggregate zu detektieren; beispielsweise wird detektiert, ob der Kompressor einer Klimaanlage geschaltet oder nicht geschaltet ist. Diese Signale werden an die Getriebesteuerung bzw. an das Getriebesteuergerät weitergeleitet.

Gemäß der Erfindung wird anschließend im Getriebesteuergerät das momentane Verlustmoment zwischen Motor und Getriebe mittels der dem Getriebesteuergerät bekannten Motordrehzahl berechnet. Somit kann der Motor über das Getriebesteuergerät und über die Getriebe-Motor-CAN-Schnittstelle auf das maximal zulässige Getriebeeingangsmoment begrenzt werden. Die Begrenzung des Motors bzw, der Motoreingriff kann stufenlos oder in Abhängigkeit von der Anzahl und Leistungsaufnahme der Nebenaggregate in definierten Stufen erfolgen.

Durch die erfindungsgemäße Konzeption, wonach die Verlustleistung bzw. das Verlustmoment aufgrund von starken motorseitigen Nebenverbrauchern bzw. Nebenaggregaten erfasst wird, wird das Getriebe zum einen auf der Zugseite bis auf die Grenzen ausgereizt; zum anderen wird das Getriebe auf der Brems- bzw. Schubseite vor mechanischer und thermischer Überlastung sicher geschützt, da die Verlustmomente im Schubbetrieb zusätzliche Bremsmomente darstellen, die bei der Bestimmung des maximalen Getriebeeingangsmomentes berücksichtigt werden.

Ferner muss bei der Schaltabstimmung kein Kompromiss mehr zwischen Getriebesicherheit und Schaltqualität eingegangen werden. Nach dem Stand der Technik führten sichere Zughochschaltungen bei ausgeschalteter Klimaanlage bei eingeschalteter bislang wegen Drucküberschuss zu Robustschaltungen. Ebenfalls führten aufgrund des Drucküberschusses auf Sicherheit getrimmte Schubrückschaltungen bei eingeschalteter Klimaanlage zu Robustschaltungen, wenn die Klimaanlage ausgeschaltet war.

Ein weiterer Vorteil der Erfindung besteht darin, dass sich bei leistungsstarken Klimaanlagen ein homogenes Fahrverhalten des Fahrzeugs ergibt, da äußere Klimaeinflüsse wie beispielsweise Temperatur und Luftfeuchtigkeit sich nicht auf die Fahrleistung des Fahrzeugs auswirken.

Des weiteren führt das hier vorgestellte Verfahren zu einer indirekten Angleichung des Fahrverhaltens zwischen beladenem und unbeladenem Fahrzeug: Für die Wärmeabstrahlung eines ruhenden Menschen wurden 100 W zugrundegelegt. Bei Fahrzeugen mit Klimaanlagen und gleichbleibender Temperatur aufgrund des Betriebs der Klimaanlagen wirkt sich die Beladung auf die Leistungsaufnahme der Klimaanlagen aus, wobei dies dann anhand des erfindungsgemäßen Verfahrens durch Anheben der Motorleistung kompensiert wird.

Gemäß einer besonders vorteilhaften Variante des erfindungsgemäßen Verfahrens können eingeschaltete Nebenaggregate, die für den sicheren Fahrzeugbetrieb nicht benötigt werden, anhand bestimmter Kriterien beim Anfahren abgeschaltet werden. Hierbei wird vorgeschlagen, die Nebenaggregate, beispielsweise die Klimaanlagen, abzuschalten, wenn das Gaspedal vollständig gedrückt ist, die Fahrzeuggeschwindigkeit eine vorgegebene Schwelle, vorzugsweise 5 km/h, unterschreitet, die Motordrehzahl unterhalb einer vorgegebenen Schwelle, vorzugsweise 1300 rpm, liegt und diese Abschaltfunktion für eine vorgegebene Zeitspanne nicht aktiviert worden ist. Ein geeigneter Wert für diese Zeitspanne beträgt 15 Sekunden. Gemäß der Erfindung wird diese Funktion deaktiviert bzw. die Nebenaggregate werden eingeschaltet, wenn das Gaspedal nicht mehr vollständig gedrückt ist, wenn die Drehzahl einen vorgegebenen Wert, beispielsweise 1300 rpm überschreitet, oder, wenn die Fahrzeuggeschwindigkeit einen vorgegebene Schwellenwert, vorzugsweise 5 km/h, überschreitet.

Das hier vorgestellte Verfahren ist insbesondere für die Anwendung bei Bussen geeignet, die eine oder mehrere starke Klimaanlagen mit entsprechend ausgelegten Kompressoren aufweisen; dadurch wird in vorteilhafter Weise der Fahrkomfort erhöht, die Abstimmung zwischen Motor und Getriebe optimiert und der Kraftstoffverbrauch gesenkt. Ferner entfällt die Notwendigkeit der Entwicklung stärker ausgelegter Getriebe und Antriebsstrangkomponenten, da die Verlustleistungen aufgrund der motorseitigen Nebenverbraucher bzw. Nebenaggregate berücksichtigt werden.

## Patentansprüche

1. Verfahren zur optimierten Erfassung des Getriebeeingangsmomentes in Fahrzeugen, die mit motorseitigen Nebenaggregaten ausgestattet sind, bei dem der Antriebsmotor ein höheres maximales Moment liefern kann, als das maximale Getriebeeingangsmoment, wofür das mit dem Antriebsmotor verbundene Getriebe ausgelegt ist, wobei in Abhängigkeit von der Verlustleistung aufgrund des Betriebs der Nebenaggregate eine Anpassung des vom Antriebsmotor an das Getriebe gelieferten Getriebeeingangsmomentes durchgeführt wird, derart, dass dem Getriebe unabhängig vom Betrieb der Nebenaggregate das maximal zulässige Getriebeeingangsmoment zur Verfügung steht und der Betriebsstatus der einzelnen Nebenaggregate detektiert wird und diese Signale an die Getriebesteuerung weitergeleitet werden, wobei die Getriebesteuerung das momentane Verlustmoment zwischen Motor und Getriebe mittels der dem Getriebesteuergerät über CAN übermittelten Motordrehzahl berechnet und wobei anschließend der Antriebsmotor über das Getriebesteuergerät und über die Getriebe-Motor-CAN-Schnittstelle auf das maximal zulässige Getriebeeingangsmoment begrenzt wird und der Antriebsmotor stufenlos oder in Abhängigkeit von der Anzahl und Leistungsaufnahme der Nebenaggregate in definierten Stufen begrenzt wird, **dadurch gekennzeichnet, dass** eingeschaltete Nebenaggregate, die für den sicheren Fahrzeugbetrieb nicht benötigt werden, anhand bestimmter Kriterien beim Anfahren abgeschaltet werden.

2. Verfahren zur optimierten Erfassung des Getriebeeingangsmomentes nach Anspruch 1, **dadurch gekennzeichnet, dass** die Nebenaggregate abgeschaltet werden, wenn das Gaspedal vollständig gedrückt ist, die Fahrzeuggeschwindigkeit eine vorgegebene Schwelle unterschreitet, die Motordrehzahl unterhalb einer vorgegebenen Schwelle liegt und diese Abschaltfunktion für eine vorgegebene Zeitspanne nicht aktiviert worden ist, wobei die Nebenaggregate wieder eingeschaltet werden, wenn das Gaspedal nicht mehr vollständig gedrückt ist, die Drehzahl einen vorgegebenen Wert überschreitet oder, wenn die Fahrzeuggeschwindigkeit einen vorgegebene Schwellenwert überschreitet.

## Claims

1. Method for optimized detection of transmission input torque in vehicles equipped with engine-mounted auxiliary units, where the engine is capable of delivering a higher maximum torque than the maximum input torque of the transmission designed for use with this engine, and where as a function of the power losses resulting from operation of these auxiliaries, the transmission input torque delivered to the transmission by the engine is adapted in such a way that the transmission receives its maximum permitted level of input torque regardless of the operation of auxiliaries, and that the operating status of individual auxiliaries is detected, and that these signals are communicated to the transmission control unit, which then calculates the engine speed transmitted to it via CAN and where, after this, the engine is limited to delivery of maximum transmission input torque via the transmission control unit and via the CAN interface between engine and transmission, and where the engine is then limited across an infinitely variable range or in defined stages as a function of the number and power intake rating of the auxiliaries, **characterized in that** engaged auxiliaries not required for safe operation of the vehicle are shut down in accordance with defined criteria when the vehicle starts.

2. Method for optimized detection of transmission input torque according to claim 1, **characterized in that** the auxiliaries are shut down when the accelerator pedal is fully depressed, the vehicle speed drops below a specified threshold, the engine speed falls below a specified threshold, and this disengagement function is not enabled within a specified period of time, with the auxiliaries being switched on again when the accelerator pedal is no longer fully depressed, the engine speed rises above a specified level, or the vehicle speed exceeds a specified threshold.

## Revendications

1. Procédé d'acquisition optimisée du couple d'entrée dune boîte de vitesses pour véhicules, dotés de groupes auxiliaires côté moteur, sachant que le moteur d'entraînement est en état de produire un couple maximum plus élevé du couple d'entrée maximum de la boîte de vitesses pour lequel la boîte de vitesses couplée au moteur d'entraînement a été conçue, sachant qu'en fonction de la puissance dissipée en raison du fonctionnement des groupes auxiliaires est effectuée une adaptation du couple d'entrée de la boîte de vitesses transmis par le moteur d'entraînement à la boîte de vitesses, et cela de façon à ce que la boîte de vitesses dispose - indépendamment du fonctionnement des groupes auxiliaires - du couple d'entrée max. admissible de la boîte de vitesses, l'état de fonctionnement des différents groupes auxiliaires étant détecté et ces signaux étant transmis au boîtier de commande de la boîte de vitesses, sachant que le boîtier de commande de la boîte de vitesses calcule le couple dissipé momentané entre le moteur et la boîte de vitesses à raide du régime moteur transmis via le réseau CAN au boîtier de commande de la boîte de vitesses, et sachant qu'ensuite le moteur d'entraînement est limité -par l'intermédiaire du boîtier de commande de la boîte de vitesses et par l'interface CAN-boîte de vitesses-moteur - au couple d'entrée max. admissible de la boîte de vitesses, et sachant que le moteur d'entraînement est limité selon des paliers définis en continu ou en fonction du nombre et de la puissance absorbée des groupes auxiliaires, **caractérisée en ce que** des groupes auxiliaires enclenchés nécessaires pour garantir le fonctionnement sûr du véhicule sont désendenchés au démarrage suivant des critères prédéfinis.

2. Procédé d'acquisition optimisée du couple d'entrée dune boîte de vitesses selon la revendication 1, **caractérisée en ce que** les groupes auxiliaires sont désendenchés lorsque la pédale d'accélérateur est complètement enfoncée, la vitesse du véhicule est inférieure à un seuil prédéfini, le régime moteur est inférieur à un seuil prédéfini et cette fonction de désendenchement n'est pas activé pendant une période prédéfinie, sachant que les groupes auxiliaires sont à nouveau enclenchés si la pédale d'accélérateur n'est plus complètement enfoncée, le régime dépasse une valuer prédéfinie ou si la vitesse du véhicule dépasse un seuil prédéfini.
